# EUROPEAN PATENT APPLICATION

(11) **EP 4 585 518 A1**
(43) Date of publication of application: **16.07.2025**
(21) Application number: 25151067.3
(22) Date of filing: 09.01.2025
(51) Int. Cl.: B64D 37/30, B64D 37/32, B64D 45/00

(54) **SYSTEM FOR MANAGING A HYDROGEN FUEL TANK ABOARD AN AIRCRAFT**

(30) Priority: 10.01.2024 US 202418408882
(71) Applicant: PRATT & WHITNEY CANADA CORP., Longueuil, Québec J4G 1A1 (CA)
(72) Inventor: WAHAB, Omer Abdul, (01BE5) Longueuil, J4G 1A1 (CA); OZOG, Mateusz, (01BE5) Longueuil, J4G 1A1 (CA)
(74) Representative: Dehns

(57) **Abstract**

A method of managing a hydrogen fuel system (32) for a propulsion system (20) of an aircraft (18) includes determining that the hydrogen fuel system (32) is operating outside of a predefined operating range based on information that is indicative of operation of the hydrogen fuel system (32) and/or propulsion system (20) operation. The method further includes obtaining information relating to at least one aircraft operating characteristic, and determining a corrective action pertaining to the hydrogen fuel system (32) that maintains an acceptable operating condition of the propulsion system (20) in view of the determined operation outside of the operating range.

## Description

### TECHNICAL FIELD

The present invention relates generally to a system for managing a hydrogen fuel system and storage tank aboard an aircraft.

### BACKGROUND

Reduction and/or elimination of carbon emissions generated by aircraft operation is a stated goal of aircraft manufacturers and airline operators. Gas turbine engines compress incoming core airflow, mix the compressed airflow with fuel that is ignited in a combustor to generate a high energy exhaust gas flow. The use of alternate fuels such as hydrogen may provide substantial reductions in undesirable emissions. The nature of alternate fuels such as hydrogen requires alternate monitoring and management processes and devices in order to practically realize the reduced emission benefits while maintaining a current level of operational control and safety.

### SUMMARY

According to an aspect of the present invention, there is provided a method of managing a hydrogen fuel system for a propulsion system of an aircraft, the method includes, among other possible things, determining that the hydrogen fuel system is operating outside of a predefined operating range based on information that is indicative of operation of the hydrogen fuel and storage system and/or propulsion system operation, obtaining information relating to at least one aircraft operating characteristic, and determining a corrective action pertaining to the hydrogen fuel and storage system that maintains an acceptable operating condition of the aircraft propulsion system in view of the determined operation outside of the operating parameter (or the predefined operating range of the hydrogen fuel system).

According to another aspect of the present invention, there is provided a hydrogen fuel and storage system for a propulsion system of an aircraft that includes, among other possible things, at least one fuel tank that is configured to store a hydrogen based fuel, at least one sensor that generates information that is indictive of a condition of the at least one fuel tank, a controller that is programmed to receive information from the at least one sensor, determine that the hydrogen fuel and storage system is operating outside of a predefined operating range based on information that is indicative of operation of the hydrogen fuel and storage system and/or propulsion system operation, obtaining information relating to at least one aircraft operating characteristic, and to determine a corrective action that pertains to the hydrogen fuel and storage system that maintains an acceptable operating condition of the aircraft propulsion system in view of the determined operation outside of the operating parameter (or the predefined operating range of the hydrogen fuel system).

According to another aspect of the present invention, there is provided an aircraft propulsion system that includes, among other possible things, an engine that is configured to generate a propulsive thrust through combustion of a hydrogen based fuel, a hydrogen fuel and storage system that includes at least one fuel tank that is configured to store a hydrogen based fuel, and at least one sensor that generates information indictive of a condition of the at least one fuel tank, and a controller that is programmed to receive information form the at least one sensor, determine that the hydrogen fuel and storage system is operating outside of a predefined operating range based on information indicative of operation of the hydrogen fuel and storage system and/or propulsion system operation, obtaining information relating to at least one aircraft operating characteristic, and to determine a corrective action that pertains to the hydrogen fuel and storage system that maintains an acceptable operating condition of the aircraft propulsion system in view of the determined operation outside of the operating parameter (or the predefined operating range of the hydrogen fuel system).

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example aircraft and aircraft propulsion system.
Figure 2 is a schematic view of an example controller of a hydrogen based fuel and storage system.
Figure 3 is a flow diagram of inputs and possible outputs utilized to control operation of hydrogen based fuel and storage system.

### DETAILED DESCRIPTION

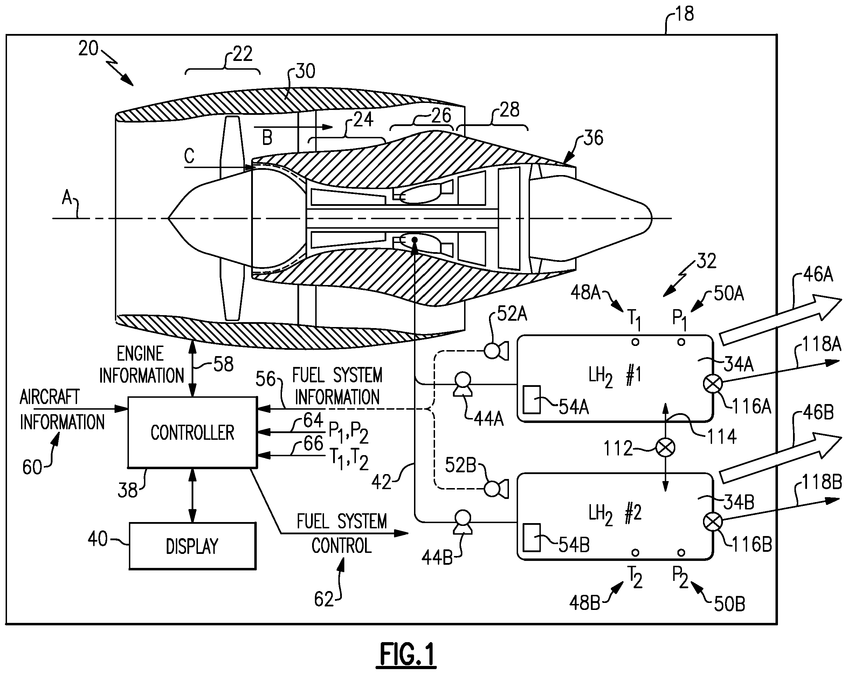

Figure 1 schematically illustrates schematically an aircraft 18 with a propulsion system 20 that utilizes a hydrogen based fuel provided by a hydrogen fuel system 32. The disclosed hydrogen fuel system 32 is controlled to implement corrective actions in response to detecting operation that is outside a predefined operating range.

The example propulsion system comprises a gas turbine engine 20 in the form of a turbofan that generally incorporates a fan section 22, a compressor section 24, a combustor section 26 and a turbine section 28. The fan section 22 drives air along a bypass flow path B in a bypass duct defined within a nacelle 30. The compressor section 24 drives air along a core flow path C into the combustor section 26. In the combustor section 26, the compressed air is mixed with fuel from the fuel system 32 and burnt to generate an exhaust gas flow that expands through the turbine section 28 and is exhausted through an exhaust nozzle 36. Although depicted as a turbofan turbine engine in the disclosed nonlimiting embodiment, it should be understood that the concepts described herein are not limited to use with turbofans as the teachings may be applied to other types of gas turbine engines.

The example hydrogen fuel system 32 includes fuel tanks 34A-B that are configured to store hydrogen. Hydrogen is stored in a liquid state that requires the control of temperatures below typical ambient temperatures encountered during aircraft operation. The pressures within the fuel tanks 34A-B are also controlled to pressures not typically encountered with the use of conventional carbon based fuels. Accordingly, monitoring of the example fuel system 32 to maintain the fuel in a desired state is warranted. The example fuel system 32 is monitored by a controller that determines corrective actions to address conditions that deviate from a predefined operating range. The corrective actions may be automatically initiated or may be provided to a decision making authority, such as a pilot, to prompt action to safeguard aircraft operation.

Although hydrogen is disclosed by way of example, other systems that utilized other non-carbon based fuels may also benefit from this invention and are within the contemplation of this disclosure. Moreover, the disclosed features may also be beneficial in an engine configured to operate with traditional carbon fuels and/or biofuels, such as sustainable aviation fuel.

The fuel system 32 includes pumps 44 A-B that generate a fuel flow 42 to the combustor section 26 of the engine 20. Each of the tanks 34A-B include a temperature sensor 48A-B and a pressure sensor 50A-B. Other sensors may be provided proximate the fuel tanks 34A-B to sense leaks. In one disclosed example, leak sensors 52A-B are disposed proximate to the each of the tanks 34A-B. All of the temperature sensors 48A-B, pressure sensors 50A-B, and leak sensors 52A-B generate information that is communicated to a controller 38. Moreover, engine operating and aircraft operating parameters may also provide an indication of fuel system operation and are utilized to ascertain a health of the fuel system 32. The temperature, pressure and other sensor information are schematically shown as being communicated to the controller 38 by arrows 56, 64 and 66.

The example fuel system 32 may further include a conduit 114 and control valve 112 that provides for transfer of hydrogen fuel between the fuel tanks 34A-B. Each of the fuel tanks 34A-B may also include a purge conduit 118A-B and a purge valve 116A-B to enable venting of fuel away from the aircraft 18. The example fuel system 32 further includes a fire suppression system that is schematically shown at 54A-B within each of the fuel tanks 34A-B. Moreover, an ejection system indicated schematically at 46A-B for ejecting or dropping one or both of the fuel tanks 34A-B from the aircraft 18 may be provided for each of the fuel tanks 34A-B.

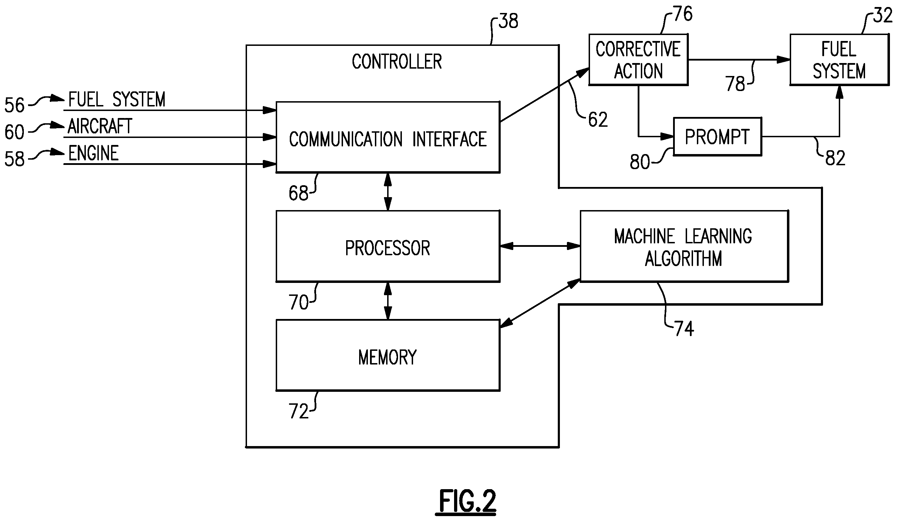

Referring to Figure 2, with continued reference to Figure 1, the controller 38 also receive information relating to other aspects of aircraft operation. In one disclosed example embodiment, the controller 38 receives information indictive of engine operation as shown schematically by arrow 58, and aircraft operation as shown by arrow 60.

The example controller 38 is a device and system for performing necessary computing or calculation operations for operation of the fuel system 32. The controller 38 may be specially constructed for operation of the fuel system 32, or it may comprise at least a general-purpose computer selectively activated or reconfigured by software programs stored in a memory device 72 and executed by processor 70. The controller 38 may further be part of full authority digital engine control (FADEC) or an electronic engine controller (EEC).

The example processor 70 may include one or more microprocessors, microcontrollers, application specific integrated circuits (ASICs), or the like. The memory device 104 may include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory device 72 may incorporate electronic, magnetic, optical, and/or other types of storage media. The memory 72 stores software that provides instructions which, when executed by the processor 70, cause the processor 70 to implement the various operations and/or generate instructions for operating the fuel system 32.

The example controller 32 may include one or more machine learning algorithms 74 to determined possible corrective actions based on the information received by a communication interface 68 of the controller 38. In one disclosed example, the machine learning algorithm 74 is a neural network. The neural network may be trained with historical data relating to modeled responses to input information relating to engine, aircraft and fuel system operation. The neural network may further be trained with (e.g., descriptions of subsystem and their content and associated redactions) and/or may be trained with the models themselves (e.g., analyzing contents of various model elements beyond their metadata description(s)). Although a neural network is disclosed by way of example, other machine learning algorithms may be utilized to process information and determine a corrective action. Accordingly, other machine learning algorithms may be utilized within the scope and contemplation of this invention.

Accordingly, the example controller 38 receives information indictive of engine operation 58, aircraft operation 60 and fuel system operation and determines a recommended corrective action 76 as an output 62. The corrective action 76 may be automatically sent as a command signal 78 to initiate operation of the fuel system 32 to remedy the detected deviation from desired operation. The corrective action 76 may be part of a prompt 80 that is sent to a display 40 to communicate to a decision making authority the proposed corrective action 76. Upon acceptance of the corrective action, a command signal 82 may be sent to the fuel system 32 to prompt action.

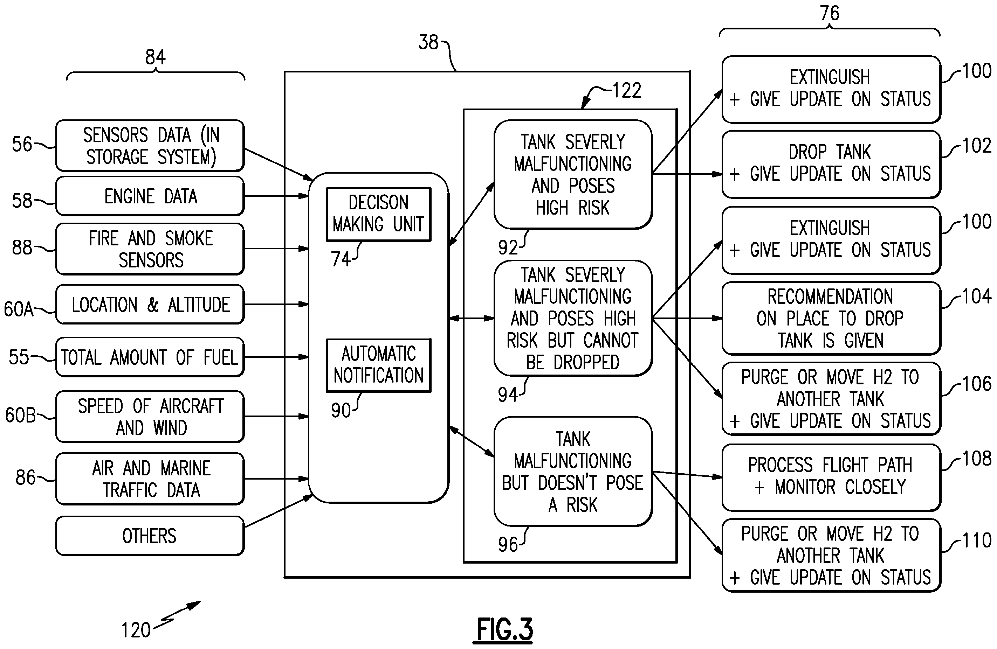

Referring to Figure 3, with continued reference to Figures 1 and 2, a flow diagram 120 schematically illustrates inputs 84 and example corrective actions 76 based on the inputs and current engine and aircraft operating conditions.

The controller 38 uses the machine learning algorithm 74 to make determine what type of corrective action 76 is appropriate. The determination of the appropriate corrective action 76 is determined, at least in part, on a severity of the detected condition. The controller 38 determines a severity level, indicated schematically at 122, based on the inputs 84. The example severity level 122 includes a high risk as indicated at 92, a high risk with mitigating circumstances as is indicated at 94 and a low risk as indicated at 96.

The high risk indicated at 92 pertains to a malfunction that poses a high risk to continued normal operation and one where engine and aircraft operation do not limit the types of corrective action that may be available. The high risk indicated at 94 pertains to malfunctions that poses may risk to continued normal operation and one where engine and aircraft operation limits available corrective actions. Either of the high risk 92, 94 severity levels 122 warrant attention and some type of corrective action in order to continue engine and aircraft operation.

The low risk indicated at 96 pertains to malfunctions that don't pose a risk to continued normal operation. Such low risks may warrant a review of the fuel system 32 upon landing or at the next scheduled maintenance operation. Although several different severity levels 122 are shown and described by way of example, additional severity levels may be included and are within the scope and contemplation of this invention.

The controller 38 uses the various inputs 84 to ascertain the severity level 122. The example inputs include information from the temperature sensors 48A-B, pressure sensors 50A-B, leak detectors 52A-B of the fuel system 32. The information from the various sensors of the fuel system 32 are referred to cumulatively as sensor data 56. Moreover, the amount of fuel within the fuel system 32 and storage tanks 34A-B is provided to the controller 38 and indicated at 55. Information from fire and smoke sensors is provided as indicated at 88. The inputs 84 includes aircraft information such as location and altitude indicated at 60A and speed ambient conditions around the aircraft as indicated at 60B. Other information includes information on engine operation as indicated at 58 and air and marine traffic data as indicated at 86. It should be appreciated that although several forms of information from various sources are disclosed by way of example, other sources and types of information may also be utilized without limit and are within the scope and contemplation of this invention.

The input information 84 is used by the controller 38, and specifically, the machine learning algorithm 74 to determine the severity level 122 and further a recommended corrective action 76. The controller 38 may also provide automatic notification as indicated at 90 of a detected severity level 122. The notification may be directly to the pilot of the aircraft and further to outside authorities such as air traffic controllers, engine manufacturers, airport, aircraft manufactures along with any other outside entity that has an interest in operation of the aircraft.

The recommended corrective actions 76 may be provided as a predetermined set of actions based on the determined severity level 122. Alternatively, the corrective actions 76 may be defined based on teaching of the machine learning algorithm based on historical inputs, defined models, and/or any other known machine learning teaching methods.

In the disclosed example, the corrective actions 76 are paired with one of the determined severity levels 122. In response to the high risk severity level as indicated at 92, the corrective action may include operation of a fire suppression system to extinguish uncontrolled combustion as indicated at 100. The corrective action may also include actuating one or both of the ejection system 46A-B to remove one or both of the fuel tanks 34A-B from the aircraft 18 as indicated at 102.

In response to the high risk severity level indicated at 94, corrective actions may include extinguishment as indicated at 100 or purging of one of the tanks 34A-B as is indicated at 106. Purging of the tanks 34A-B would include operation of one or both of the purge valves 116A-B to evacuate fuel from the aircraft 18 through a corresponding one of the purge conduits 118A-B.

In the high risk severity level indicated at 94, ejection of the fuel tanks 34A-B is not an option. Accordingly, one possible corrective action 76 includes a recommendation as to when ejection of the fuel tanks 34A-B may become possible as is indicated at 104.

In the low risk severity level indicated at 96, the possible corrective actions include purging of one of the tanks or moving fuel between the tanks as indicated at 110. Movement of fuel between the fuel tanks 34A-B may be a viable corrective action when one of the fuel tanks 34A-B is not operating as desired and the other fuel tank 34A-B has sufficient capacity to accept additional fuel. The controller 38 initiates operation of the transfer valve 112 to move fuel between the tanks 34A-B and remedy the detected operating deviation.

Moreover, in the low risk level 96, it is an option to simply proceed with the flight as normal while recognizing that increased monitoring may be warranted as is indicated at 108. Although several corrective actions have been shown and described by way of example, additional corrective actions are possible within the contemplation and scope of this invention.

For each of the corrective actions, the controller 38 may generate the output 62 to control a portion of the fuel system 32 that corresponds to the recommended corrective action. For example, pumps 44A-B and may be adjusted and/or shut off as appropriate to facilitate the respective corrective action 76. Moreover, any other fuel system component such as valves and/or pumps would be actuated and operated in a manner corresponding to the corrective action. Additionally, the controller 38 may further alter control of engine and aircraft operation in a manner that corresponds with changing operational capacities the result from corrective actions applied to the fuel system 32.

The output 62 from the controller 38 may automatically trigger the determined corrective action or may trigger a prompt for a decision making authority to accept the recommended action. The decision making authority would include the pilot of the aircraft. The decision making authority may also include another system onboard the aircraft that is accorded final control over aircraft operation.

According to an aspect of the present invention, there is provided a method of managing a hydrogen fuel system 32 for a propulsion system 20 of an aircraft 18, the method includes, among other possible things, determining that the hydrogen fuel system 32 is operating outside of a predefined operating range based on information that is indicative of operation of the hydrogen fuel system and/or propulsion system operation, obtaining information relating to at least one aircraft operating characteristic, and determining a corrective action 76 pertaining to the hydrogen fuel system that maintains an acceptable operating condition of the aircraft propulsion system 20 in view of the determined operation outside of the operating parameter (or the predefined operating range of the hydrogen fuel system).

In an embodiment according to the previous aspect, the method further includes automatically executing the determined corrective action 76.

In an embodiment according to any of the previous aspects or embodiments, the method further includes automatically executing the determined corrective action 76 when the determined corrective action 76 is one of a predetermined set of corrective actions.

In an embodiment according to any of the previous aspects or embodiments, the method further includes generating a recommendation prompt 80 that communicates the determined corrective action 76 to a decision making authority and executing the corrective action 76 in response to a signaled acceptance by the decision making authority.

In an embodiment according to any of the previous aspects or embodiments, the method further includes obtaining information that is indicative of operation of the hydrogen fuel system with at least one sensor.

In an embodiment according to any of the previous aspects or embodiments, the corrective action 76 includes an adjustment to an operating parameter of the hydrogen fuel system.

In an embodiment according to any of the previous aspects or embodiments, the corrective action 76 includes a transfer of fuel between different hydrogen fuel storage tanks 34.

In an embodiment according to any of the previous aspects or embodiments, the corrective action 76 includes purging a hydrogen fuel tank 34.

In an embodiment according to any of the previous aspects or embodiments, the corrective action 76 includes actuating a fire suppression system.

In an embodiment according to any of the previous aspects or embodiments, the corrective action 76 includes removing a hydrogen fuel tank from the aircraft 18.

In an embodiment according to any of the previous aspects or embodiments, the corrective action 76 includes a modification to a current flight profile.

In an embodiment according to any of the previous aspects or embodiments, the method further includes determining a risk 122 to continued aircraft operation within a predefined operating range and further determining the corrective action 76 based on the determined risk.

In an embodiment according to any of the previous aspects or embodiments, the determined corrective action 76 is facilitated by a machine learning algorithm 74 that is programmed to evaluate the information indicative of operation of the fuel system 32 and/or of the propulsion system 20 along with possible corrective actions and to determine a recommended corrective action 76.

According to another aspect of the present invention, there is provided a hydrogen fuel and storage system for a propulsion system 20 of an aircraft 18 that includes, among other possible things, at least one fuel tank 34 that is configured to store a hydrogen based fuel, at least one sensor that generates information that is indictive of a condition of the at least one fuel tank 34, a controller 38 that is programmed to receive information from the at least one sensor, determine that the hydrogen fuel and storage system is operating outside of a predefined operating range based on information that is indicative of operation of the hydrogen fuel and storage system and/or propulsion system operation, obtaining information relating to at least one aircraft operating characteristic, and to determine a corrective action 76 that pertains to the hydrogen fuel and storage system that maintains an acceptable operating condition of the aircraft propulsion system 20 in view of the determined operation outside of the operating parameter (or the predefined operating range of the hydrogen fuel system).

In an embodiment according to any of the previous aspects or embodiments, the controller 38 is further programmed to automatically execute the determined corrective action 76.

In an embodiment according to any of the previous aspects or embodiments, the controller 38 is further programmed to generate a recommendation prompt 80 that communicates the determined corrective action 76 to a decision making authority and execute the corrective action 76 in response to a signaled acceptance by the decision making authority.

In an embodiment according to any of the previous aspects or embodiments, the controller 38 is further programmed to determine a risk 122 to continued aircraft operation within a predefined operating range and to determine the corrective action 76 based on the determined risk 122.

According to another aspect of the present invention, there is provided an aircraft propulsion system 20 that includes, among other possible things, an engine 20 that is configured to generate a propulsive thrust through combustion of a hydrogen based fuel, a hydrogen fuel and storage system that includes at least one fuel tank 34 that is configured to store a hydrogen based fuel, and at least one sensor 48/50 that generates information indictive of a condition of the at least one fuel tank 34, and a controller 38 that is programmed to receive information form the at least one sensor 48/50, determine that the hydrogen fuel and storage system is operating outside of a predefined operating range based on information indicative of operation of the hydrogen fuel and storage system and/or propulsion system operation, obtaining information relating to at least one aircraft operating characteristic, and to determine a corrective action 76 that pertains to the hydrogen fuel and storage system that maintains an acceptable operating condition of the aircraft propulsion system 20 in view of the determined operation outside of the operating parameter (or the predefined operating range of the hydrogen fuel system).

In an embodiment according to any of the previous aspects or embodiments, the controller 38 is further programmed to automatically execute the determined corrective action 76 when the predetermined corrective action determined corrective action 76 is one of a predetermined set of corrective actions and to generate a recommendation prompt 80 that communicates the determined corrective action 76 to a decision making authority and execute the corrective action 76 in response to a signaled acceptance by the decision making authority when the predetermined corrective action is not within the predetermined set of corrective actions.

In an embodiment according to any of the previous aspects or embodiments, the controller 38 is further programmed to determine a risk 122 to continued aircraft operation within a predefined operating range and to determine the corrective action 76 based on the determined risk 122.

In an embodiment according to any of the previous aspects or embodiments, the propulsion system 20 utilizes a machine learning algorithm 74 to process information indicative of operation of the hydrogen based fuel and storage system and recommend and/or implement corrective actions to aid in operation of the aircraft 18.

Although an example embodiment has been disclosed, a worker of ordinary skill in this art would recognize that certain modifications would come within the scope of this invention. For that reason, the following claims should be studied to determine the scope and contents of this invention.

## Claims

1. A method of managing a hydrogen fuel system (32) for a propulsion system (20) of an aircraft (18), the method comprising:
determining that the hydrogen fuel system (32) is operating outside of a predefined operating range based on information indicative of operation of the hydrogen fuel system (32) and/or propulsion system (20) operation;
obtaining information relating to at least one aircraft operating characteristic; and
determining a corrective action (76) pertaining to the hydrogen fuel system (32) that maintains an acceptable operating condition of the propulsion system (20) in view of the determined operation outside of the predefined operating range of the hydrogen fuel system (32).

2. The method as recited in claim 1, further comprising automatically executing the determined corrective action (76).

3. The method as recited in claim 1, further comprising automatically executing the determined corrective action (76) when the determined corrective action (76) is one of a predetermined set of corrective actions.

4. The method as recited in claim 1, 2 or 3, further comprising generating a recommendation prompt (80) communicating the determined corrective action (76) to a decision making authority and executing the corrective action (76) in response to a signaled acceptance by the decision making authority.

5. The method as recited in any preceding claim, further comprising, obtaining information indicative of operation of the hydrogen fuel system (32) with at least one sensor (48A,48B,50A,50B,52A,52B;88).

6. The method as recited in any preceding claim, wherein the corrective action (76) comprises an adjustment to an operating parameter of the hydrogen fuel system (32).

7. The method as recited in any preceding claim, wherein the corrective action (76) comprises:
a transfer of fuel between different hydrogen fuel storage tanks (34A,34B); and/or purging a hydrogen fuel tank (34A,34B).

8. The method as recited in any preceding claim, wherein the corrective action (76) comprises actuating a fire suppression system.

9. The method as recited in any preceding claim, wherein the corrective action (76) comprises removing a or the hydrogen fuel tank (34A,34B) from the aircraft (18).

10. The method as recited in any preceding claim, wherein the corrective action (76) comprises a modification to a current flight profile.

11. The method as recited in any preceding claim, further comprising determining a risk (92,94,96) to continued aircraft operation within a predefined operating range and further determining the corrective action (76) based on the determined risk (92,94,96).

12. The method as recited in any preceding claim, where the determined corrective action (76) is facilitated by a machine learning algorithm (74) programmed to evaluate the information indicative of operation of the hydrogen fuel system (32) and/or of the propulsion system (20) along with possible corrective actions and to determine a recommended corrective action (76).

13. A hydrogen fuel and storage system (32) for a propulsion system (20) of an aircraft (18), the hydrogen fuel and storage system (32) comprising:
at least one fuel tank (34A,34B) configured to store a hydrogen based fuel;
at least one sensor (48A,48B,50A,50B,52A,52B) generating information indictive of a condition of the at least one fuel tank (34A,34B); and
a controller (38) programmed to:
receive information from the at least one sensor (48A... 52B);
determine that the hydrogen fuel and storage system (32) is operating outside of a predefined operating range based on information indicative of operation of the hydrogen fuel and storage system (32) and/or propulsion system operation;
obtain information relating to at least one aircraft operating characteristic; and
determine a corrective action (76) pertaining to the hydrogen fuel and storage system (32) that maintains an acceptable operating condition of the propulsion system (20) in view of the determined operation outside of the predefined operating range of the hydrogen fuel system (32),
optionally wherein the controller (38) is further programmed to:
automatically execute the determined corrective action (76);
generate a recommendation prompt communicating the determined corrective action (76) to a decision making authority and execute the corrective action (76) in response to a signaled acceptance by the decision making authority; and/or
determine a risk (92,94,96) to continued aircraft operation within a predefined operating range and to determine the corrective action (76) based on the determined risk (92,94,96).

14. The hydrogen fuel and storage system (32) as recited in claim 13, wherein the controller (38) is further programmed to:
automatically execute the determined corrective action (76) when the determined corrective action (76) is one of a predetermined set of corrective actions; and
generate a recommendation prompt communicating the determined corrective action (76) to a decision making authority and execute the corrective action (76) in response to a signaled acceptance by the decision making authority when the determined corrective (76) action is not within the predetermined set of corrective actions.

15. An aircraft propulsion system (20) comprising:
an engine configured to generate a propulsive thrust through combustion of a hydrogen based fuel; and
the hydrogen fuel and storage system (32) of claim 13 or 14.
